# EUROPEAN PATENT APPLICATION

(11) **EP 4 290 497 A1**
(43) Date of publication of application: **13.12.2023**
(21) Application number: 22178463.0
(22) Date of filing: 10.06.2022
(51) Int. Cl.: G08G 3/02, G01S 13/937

(54) **NAVIGATION ROUTE PLANNING APPARATUS AND NAVIGATION ROUTE PLANNING METHOD**

(71) Applicant: FURUNO ELECTRIC CO., LTD., Nishinomiya-City, Hyogo 662-8580 (JP)
(72) Inventor: UOSHITA, Seiichi, Nishinomiya-City, 662-8580 (JP)
(74) Representative: Müller Hoffmann & Partner

(57) **Abstract**

A navigation route planning apparatus (1) includes a planned route receiving module (51) that receives a planned route (202), a movable body information acquiring module (52) that receives movable body information, an obstacle information acquiring module (53) that receives obstacle information, a collision risk evaluator (54) including a neural network that receives the planned route, the movable body information, and the obstacle information as input data and generate collision avoidance output data. The collision risk evaluator (54) determines whether the movable body (200) avoids the planned route (202) or continues following the planned route (202) based on the collision avoidance output data using the trained neural network.

## Description

The present disclosure mainly relates to a marine navigation system for safely navigating a ship, and more specifically to a navigation route planning apparatus and method for safely navigating a ship by avoiding collisions with surrounding obstacles using artificial intelligence.

In general, a movable body, such as vessel or ship, sets a planned route for navigation from a departure or source location to a destination location before initiating the navigation. Currently, the movable body may include navigation systems and devices for generating a planned route and monitoring the planned route for safely navigating the movable body. Additionally, these conventional navigation systems and devices use a plurality of sensor modules for acquiring movable body information and obstacle information in order to track and identify a position of the nearby obstacles and other ships including the movable body (or own ship) on the planned route for avoiding collisions.

However, during navigation on the planned route, there may be scenarios where the planned route has to be changed due to artificial factors, such as appearance of the nearby obstacles and other ships that may cross the planned route. In addition, natural factors, such as sudden changes in oceanographic conditions, tides, and other external disturbance factors can force a change in a navigation route from the planned route. Thus, the vessel navigating personnel might need assistance to navigate through the oceanographic conditions and tides in such a manner as to avoid collision with nearby obstacles or ships and safely navigate the movable body, such as vessel, along the planned route. For the aforementioned reasons, there is a need for providing a system and method that assists the vessel navigating personnel to safely navigate the movable body by avoiding the collisions with the obstacles and other ships.

In an embodiment of the present disclosure, there is provided a navigation route planning apparatus that includes a planned route receiving module, a movable body information acquiring module, an obstacle information acquiring module, a collision risk evaluator, and a machine learning module. The planned route receiving module is configured to receive a planned route, a movable body moving on a water surface planned to move along. The movable body information acquiring module is configured to receive movable body information that includes a position, a moving direction, and a speed of the movable body. The obstacle information acquiring module is configured to receive obstacle information that includes a position, a moving direction, and a speed of an obstacle. The collision risk evaluator includes a first neural network that is configured to receive the planned route, the movable body information, and the obstacle information as input data, and generate collision avoidance output data which is a result of collision avoidance of the movable body with the obstacle. The collision risk evaluator is configured to determine whether the movable body avoids the planned route or continues following the planned route based on the collision avoidance output data using the trained first neural network.

Additionally, or optionally, the first neural network is further configured to receive a relative positional relationship between the planned route and the obstacle based on the position of the movable body as the input data.

Additionally, or optionally, the navigation route planning apparatus further comprises a collision avoidance result input module that is configured to provide a collision risk estimation value that indicates a degree of risk of collision to the machine learning module. The collision risk evaluator is further configured to generate a collision risk estimation value based on the collision avoidance output data using the trained first neural network.

Additionally, or optionally, the navigation route planning apparatus further comprises a collision avoidance result input module that is configured to provide collision risk data that includes a closest distance between the movable body and the obstacle as the collision avoidance output data to the machine learning module. The collision risk evaluator is further configured to generate a closest distance output based on the collision avoidance output data using the trained first neural network.

Additionally, or optionally, the collision risk data further includes a time required to traverse the closest distance output from a position of the movable body without collision avoidance. The collision risk evaluator determines whether the movable body avoids the planned route or continues following the planned route based on the closest distance output and the time required by the movable body to traverse the closest distance output using the trained first neural network.

Additionally, or optionally, the movable body information acquiring module is further configured to periodically receive the movable body information in a first time period. The collision risk evaluator is further configured to determine whether the movable body avoids the planned route or continues following the planned route based on the collision avoidance output data using the trained first neural network.

Additionally, or optionally, the obstacle information acquiring module is further configured to periodically receive the obstacle information in a second time period. The collision risk evaluator is further configured to determine whether the movable body avoids the planned route or continues following the planned route based on the collision avoidance output data using the trained first neural network.

Additionally, or optionally, the trained first neural network is further configured to periodically receive the input data that includes the latest acquired movable body information and the latest acquired obstacle information as a reference in a third time period. The third time period longer than at least any one of: the first time period and the second time period. The collision risk evaluator is further configured to periodically determine whether the movable body avoids the planned route or continues following the planned route based on the collision avoidance output data using the trained first neural network.

Additionally, or optionally, the navigation route planning apparatus further comprises an avoidance route generator. The avoidance route generator includes a second neural network that is configured to receive the planned route, the movable body information, the obstacle information, and the collision avoidance output data as input data, and generate avoidance route output data as a result of avoidance route for avoiding the obstacle. The avoidance route generator is configured to generate an avoidance route in place of the planned route ahead of the current position or a predicted position of the movable body based on the avoidance route output data using the trained second neural network.

Additionally, or optionally, the movable body information acquiring module configured to periodically receive the movable body information that includes a moving direction of the movable body. The obstacle information acquiring module is configured to periodically receive the obstacle information of the obstacle. The trained first neural network is further configured to periodically receive the input data that includes the latest acquired movable body information and the latest acquired obstacle information as a reference in the third time period that is longer than at least any one of: the first time period and the second time period. The collision risk evaluator is configured to periodically determine whether the movable body avoids the planned route or continues following the planned route based on the collision avoidance output data using the trained first neural network. The trained second neural network is further configured to periodically receive the input data as a reference when the collision risk evaluator determines that the movable body is required to avoid the planned route. The avoidance route generator is configured to periodically generate the avoidance route in place of the planned route ahead of the current position or a predicted position of the movable body to avoid the collision with the obstacle based on the avoidance route output data using the trained second neural network.

Additionally, or optionally, the avoidance route generator is further configured to periodically generate the avoidance route including a return path based on the avoidance route output data. The return path is followed by the movable body to return to the planned route while avoiding collision with the obstacle.

Additionally, or optionally, the obstacle information includes information detected by at least one of: a radio detection and ranging (RADAR) device, a light detection and ranging (LIDAR) device, a sound navigation and ranging (SONAR) device, and an image sensor, such as a camera or a video recorder, installed on the movable body, information acquired by automatic identification system (AIS) receiver, information transmitted from another ship, and information acquired by detection of a radio communication at a place other than the movable body.

Additionally, or optionally, the obstacle information further includes information relating to other movable bodies that include at least one of: other vessels, tidal currents, weather, reefs, and stranded ships.

Additionally, or optionally, the navigation route planning apparatus further comprises a display module that is configured to display the generated avoidance route along with the planned route on a screen of the display module.

Additionally, or optionally, a navigation route planning system further comprises a route planning module configured to provide one or more routes for navigation of the movable body from the source location to the destination location, a global navigation satellite system, and one or more sensor modules configured to acquire obstacle information.

In another aspect of the present disclosure, there is provided a navigation route planning apparatus. The navigation route planning apparatus further comprises a planned route receiving module, a movable body information acquiring module, an obstacle information acquiring module, and an avoidance route generator. The planned route receiving module is configured to receive a planned route, a movable body moving on a water surface planned to move along. The movable body information acquiring module is configured to receive movable body information that includes a position, a moving direction, and a speed of the movable body. The obstacle information acquiring module is configured to receive obstacle information that includes a position, a moving direction, and a speed of an obstacle. The avoidance route generator includes a first neural network that is configured to receive the planned route, the movable body information, and the obstacle information as input data, and generate avoidance route output data as a result of avoidance route. The avoidance route generator is configured to generate the avoidance route in place of the planned route ahead of a current position or a predicted position of the movable body based on the avoidance route output data using the trained first neural network.

In yet another aspect of the present disclosure, there is provided navigation route planning method. The navigation route planning method includes, receiving a planned route, a movable body moving on a water surface planned to move along, receiving movable body information that includes a position, a moving direction, and a speed of the movable body, receiving obstacle information that includes a position, a moving direction, and a speed of an obstacle, receiving the planned route, the movable body information, and the obstacle information as input data, and generating collision avoidance output data which is a result of collision avoidance of the movable body with the obstacle, determining whether the movable body avoids the planned route or continues following the planned route based on the collision avoidance output data using the trained first neural network.

In yet another aspect of the present disclosure, there is provided a non-transitory computer-readable medium having stored thereon computer-executable instructions which, when executed by a computer, cause the computer to receive a planned route, a movable body moving on a water surface planned to move along, receive movable body information that includes a position, a moving direction, and a speed of the movable body, receive obstacle information that includes a position, a moving direction, and a speed of an obstacle, receive the planned route, the movable body information, and the obstacle information as input data, and generate collision avoidance output data which is a result of collision avoidance of the movable body with the obstacle, and determine whether the movable body avoids the planned route or continues following on the planned route based on the collision avoidance output data using a trained first neural network.

The problem of not being able to display visual information that can be intuitively used by the vessel navigating personnel to navigate the ship safely on the planned route is solved by using a navigation route planning apparatus that generates an avoidance route ahead of a current position or a predicted position of the own ship using artificial intelligence when an obstacle is determined in the planned route. Accordingly, the navigation route planning apparatus of the present disclosure allows the vessel navigating personnel, *i.e.,* a user who operates the own ship to safely navigate the own ship on the avoidance route displayed on a screen of a display module by avoiding collisions with surrounding obstacles such as, but not limited to, target ships, terrains.

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:
**FIG. 1** is a block diagram illustrating a configuration of a navigation route planning system for safely navigating a movable body (or own ship) according to one embodiment of the present disclosure;
**FIGs. 2A- 2C** illustrate an evasion of the own ship from a planned route to avoid collision with an obstacle;
**FIG. 3** is a block diagram illustrating a configuration of the first machine learning module, according to one embodiment of the present disclosure;
**FIG. 4** is a block diagram illustrating the navigation route planning system for safely navigating the own ship, according to one embodiment of the present disclosure;
**FIG. 5** is a block diagram illustrating a configuration of the first machine learning module, according to another embodiment of the present disclosure;
**FIG. 6** is a block diagram illustrating the navigation route planning system for safely navigating the own ship, according to yet another embodiment of the present disclosure;
**FIG. 7** is a block diagram illustrating a configuration of the first machine learning module, according to yet another embodiment of the present disclosure;
**FIGs. 8-10** illustrate calculation of the collision risk value based on latest movable body information and latest obstacle information, according to various embodiments of the present disclosure;
**FIG. 11** is a block diagram illustrating a configuration of a navigation route planning system for safely navigating the own ship, according to yet another embodiment of the present disclosure;
**FIG. 12** illustrates a region surrounding the own ship;
**FIG. 13** is a block diagram illustrating a configuration of a navigation route planning system for safely navigating the own ship, according to yet another embodiment of the present disclosure;
**FIG. 14** is a block diagram illustrating a configuration of the navigation route planning system for safely navigating the own ship, according to yet another embodiment of the present disclosure;
**FIG. 15** represents a flow chart illustrating a navigation route planning method in accordance with an embodiment of the present disclosure;
**FIGs. 16A** and **16B****,** collectively, represent a flow chart illustrating a navigation route planning method in accordance with another embodiment of the present disclosure;
**FIGs. 17A** and **17B****,** collectively, represent a flow chart illustrating a navigation route planning method in accordance with yet another embodiment of the present disclosure; and
**FIG. 18** represents a flow chart illustrating a navigation route planning method in accordance with yet another embodiment of the present disclosure.

Example apparatus are described herein. Other example embodiments or features may further be utilized, and other changes may be made, without departing from the spirit or scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

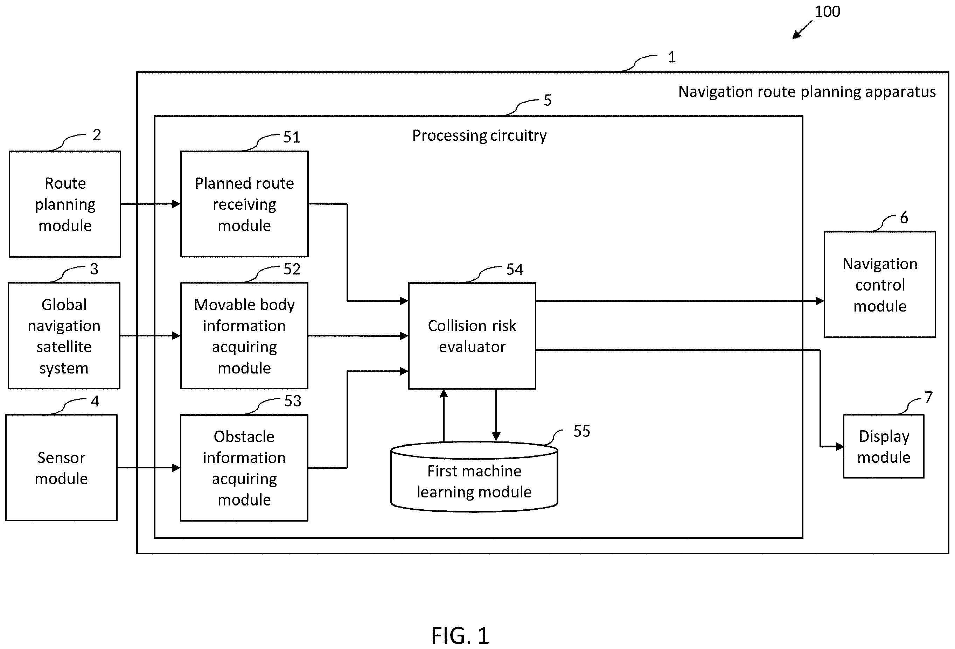

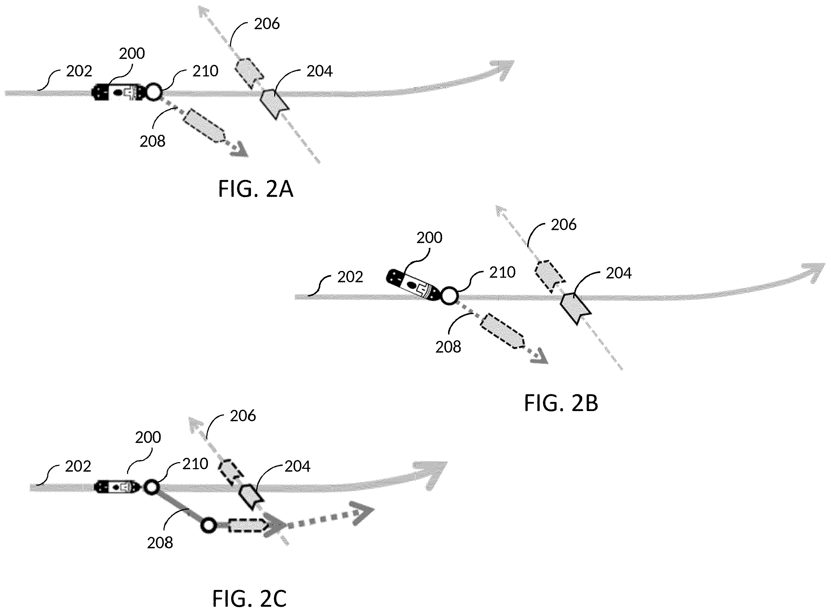

**FIG. 1** is a block diagram illustrating a configuration of a navigation route planning system **100** for safely navigating a movable body **200** (hereinafter also referred to as an "own ship **200"),** according to one embodiment of the present disclosure. **FIGs. 2A- 2C** illustrate an evasion of the own ship **200** from a planned route **202** to avoid collision with an obstacle **204.**

The navigation route planning system **100** may be installed on the own ship **200** for navigation of the own ship **200** from a source location to a destination location. Once the voyage has begun, the navigation of the own ship **200** along a planned route **202** that is a path to be followed by the own ship **200** between the source location and the destination location must be monitored. The navigation route planning system **100** is configured to be used for safely navigating the own ship **200** using artificial intelligence by avoiding collisions with surrounding obstacles such as, but not limited to, target ships, terrains, and other target objects. A ship operator, *i.e.,* a user who operates the own ship **200,** navigates the own ship **200** along the planned route **202** with assistance of the navigation route planning system **100.** In one embodiment, as illustrated in **FIGs. 2A- 2C****,** the planned route **202** is a path to be followed by the own ship **200** to navigate and safely reach the destination location, and the planned route **202** indicates a route of the own ship **200** moving on a water surface, along which the own ship **200** has planned to move, and a current course direction from a current position of the own ship **200.**

The navigation route planning system **100** includes a navigation route planning apparatus **1,** a route planning module **2,** a global navigation satellite system (GNSS) **3,** and one or more sensor modules **4.** The navigation route planning apparatus **1** include processing circuitry **5,** a navigation control module **6,** and a display module **7.**

The route planning module **2** is configured to store a plurality of routes for navigation of the own ship **200.** In one embodiment, the ship operator may operate various peripheral devices operably coupled with the navigation route planning apparatus **1** for performing various functions pursuant to functionalities in the present disclosure. For example, the user can provide various kinds of instructions to the navigation route planning apparatus **1** about a source location and a destination location for navigation of the own ship **200** by operating the peripheral devices, such as a keyboard and/or the mouse. Based on the information obtained from the user, such as the source location and the destination location, the route planning module **2** may provide one or more routes for navigation of the own ship **200** from the source location to the destination location. In one embodiment, each route may be associated with route information that may include date and time of travel, weather conditions, tidal conditions, and the like. The route planning module **2** receives a user input from the user regarding selection of a route as the planned route **202** for navigation of the own ship **200** from the source location to the destination location. It will be apparent to person skilled in the art that although in the present embodiment, the user selects the route for travelling, in an alternate embodiment, an optimal route may be selected by the route planning module **2** based on current weather conditions, time of travel, tidal conditions, and the like.

The navigation route planning apparatus **1** uses information associated with the own ship **200** and one or more obstacles in the region surrounding the own ship **200** for safely navigating the own ship **200** from the source location to the destination location along the planned route **202.** The GNSS **3** acquires movable body information that includes a position, a moving direction, and a speed of the own ship **200.** The GNSS **3** accurately acquires the movable body information of the own ship **200** from satellites. The one or more sensor modules **4** acquire obstacle information that includes a position, a moving direction, and a speed of an obstacle **204** that may interfere with the navigation of the own ship **200.** The one or more sensor modules **4** may correspond to one or more conventional maritime electronics devices. The one or more sensor modules **4** include at least one of: a radio detection and ranging (RADAR) device, a light detection and ranging (LIDAR) device, a sound navigation and ranging (SONAR) device, an automatic identification system (AIS) receiver, an image sensor, such as a camera or a video recorder, installed on the own ship **200,** and the like. In one embodiment, the obstacle information includes information detected by at least one of: the RADAR, the LIDAR device, the SONAR device, and the image sensor, information acquired by the AIS receiver, information transmitted from another ship, and information acquired by detection of a radio communication at a place other than the own ship **200.**

In one embodiment, the obstacle information further includes information relating to other movable bodies that include at least one of: other vessels, tidal currents, weather, reefs, and stranded ships. It will be apparent to a person skilled in the art that the information relating to the other movable bodies is acquired in a similar manner as the information for the obstacle **204** is acquired.

With continued reference to **FIG. 1****,** the processing circuitry **5** includes a planned route receiving module **51,** a movable body information acquiring module **52,** an obstacle information acquiring module **53,** a collision risk evaluator **54,** and a first machine learning module **55.**

The planned route receiving module **51** may be operably coupled with, and hence in communication with, the route planning module **2** for receiving the route selected by the ship operator as the planned route **202.** The movable body information acquiring module **52** may be operably coupled with, and hence in communication with the GNSS **3** for receiving the movable body information associated with the own ship **200.** The movable body information acquiring module **52** is further configured to store the acquired movable body information.

The obstacle information acquiring module **53** may be operably coupled with, and hence in communication with the one or more sensor modules **4** for receiving the obstacle information associated with the obstacle **204.** The obstacle information acquiring module **53** is further configured to store the obstacle information. In one embodiment, the movable body information acquiring module **52** periodically receives the movable body information of the own ship **200,** and the obstacle information acquiring module **53** periodically receives the obstacle information of the obstacle **204.**

The collision risk evaluator **54** may be operably coupled with, and hence in communication with the planned route receiving module **51,** the movable body information acquiring module **52,** and the obstacle information acquiring module **53.** The collision risk evaluator **54** receives the route selected by the user as the planned route **202,** the movable body information of the own ship **200,** and the obstacle information of the obstacle **204.**

The collision risk evaluator **54** includes a first neural network (not shown) receives the planned route, the movable body information, and the obstacle information as input data and generates collision avoidance output data which is a result of collision avoidance of the own ship **200** with the obstacle **204** along the current course direction. The first neural network further receives a relative positional relationship between the planned route **202** and the obstacle **204** based on the position of the own ship **200** as the input data. The first neural network is a computational model composed of neurons (or nodes, units, or perceptrons) and connections between the nodes used for solving artificial intelligence problems. The first neural network comprises a plurality of input neurons and at least one output neuron. A strength of each connection is expressed by a numerical value called a weight, which may be modified. The activation of a given node is based on the activations of the nodes that have connections directed at that node and the weights on those connections.

The first machine learning module **55** is configured to train the first neural network to learn the collision avoidance output data using the input data as training data. The collision risk evaluator **54** is configured to determine whether the own ship **200** avoids the planned route **202** or continues following the planned route **202** based on the collision avoidance output data using the trained first neural network.

Referring now to **FIGs. 2A- 2C****,** in one example, if the obstacle **204** is sailing along a predicted future path **206** and the own ship **200** continues to sail along the planned route **202** such that the predicted future path **206** and the planned route **202** interfere at a point, then the collision risk value is high and there will be a higher risk of collision between the own ship **200** and the obstacle **204.** The collision risk evaluator **54** is further configured to generate a collision risk estimation value based on the collision avoidance output data using the trained first neural network and determine whether the own ship **200** avoids the planned route **202** or continues following the planned route **202.** Relevant potential risks of collision may be determined by the collision risk estimation value. If the collision risk estimation value is high then the own ship **200** avoids the planned route **202.** In one example, if the collision risk evaluator **54** determines that the own ship **200** avoids the planned route **202** based on the collision risk value, then the navigation route planning apparatus **1** facilitates the ship operator to sail the own ship **200** through a different course **208** *i.e.,* an avoidance route from the current position of the own ship **200** as a reference point **210** as illustrated in the **FIGs. 2A- 2C****.** In one example, based on an actual direction of the own ship **200,** the current course direction of the own ship **200** is along the planned route **202,** as shown in **FIG. 2A****.** In another example, based on an actual direction of the own ship **200,** the current course direction of the own ship **200** is along the avoidance route **208,** as shown in **FIG. 2B****.**

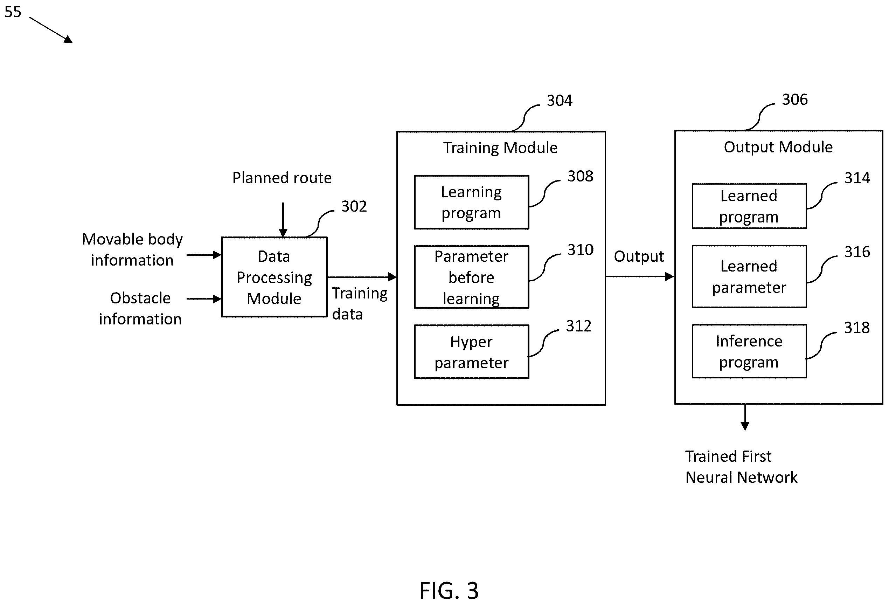

**FIG. 3** is a block diagram illustrating a configuration of the first machine learning module **55,** according to one embodiment of the present disclosure. The first machine learning module **55** includes a data processing module **302,** a training module **304,** and an output module **306.** During the learning process, the data processing module **302** receives the planned route **202,** the movable body information, and the obstacle information as the input data, and processes the input data to generate the training data.

Further, the training module **304** stores a learning program **308,** a parameter before learning **310,** and a hyper parameter **312.** The training module **304** receives the training data from the data processing module **302,** and trains the first neural network to learn the collision avoidance output data using the training data, the learning program **308,** and the hyper parameter **312.** The parameter before learning **310** is a value of the collision avoidance output data before learning. The hyper parameter **312** is a parameter whose value is used to control the training of the first neural network. The output module **306** received the output of the training module **304,** and stores a learned program **314** and a learned parameter **316** based on the output of the training module **304.** The output module **306** provides the trained first neural network to the collision risk evaluator **54** based on the learned program **314,** the learned parameter **316,** and an inference program **318** stored in the output module **306.**

After the learning process, the trained first neural network receives the input data as a reference. The collision risk evaluator **54** determines whether the movable body **200** avoids the planned route **202** or continues following the planned route **202** based on the collision avoidance output data using the trained first neural network. The first neural network training involves the use of an error function. Weights are adjusted such as to minimize a sum of average of the error function on the training data. The process of adjusting the weights is commonly referred to as training. A penalty term is generally applied to the error to restrict the weights in some manner that is thought desirable. The penalty term is used to penalize the magnitudes of weights. In this manner, the first neural network is trained and provides more accurate output with each repetition of a task, such as the generation of the collision avoidance output data. Based on the collision avoidance output data, the collision risk evaluator **54** determines whether the own ship **200** avoids the planned route **202** or continues following the planned route **202.**

Referring now to **FIG. 1****,** the navigation control module **6** may be operably coupled with, and hence in communication with the collision risk evaluator **54.** The navigation control module **6** monitors and controls the navigation of the own ship **200,** based on the determination whether the own ship **200** avoids the planned route **202** or continues following the planned route **202.** To control the navigation of the own ship **200,** the navigation control module **6** may control the position, the moving direction, and the speed of the own ship **200.** Based on the determination that the own ship **200** avoids the planned route **202,** the navigation control module **6** navigates the own ship **200** along a route, such as the avoidance route **208,** different than the current planned route **202.**

The display module **7** may be located on-board the own ship **200** and provided with, or in electrical connection to, the collision risk evaluator **54** on the own ship **200,** as the ship instrument for purposes as will be explained in detail later herein. The display module **7** displays the planned route **202** along which the own ship **200** is traversing. In addition, when the own ship **200** avoids the planned route **202,** the display module **7** displays the avoidance route **208** along which the own ship **200** navigates to avoid the collision with the obstacle **204.** Thus, the ship operator may safely navigate the own ship **200** by avoiding the collision with the obstacle **204.**

The display module **7** may be configured as, for example, a display screen that forms part of a navigation assisting device to which a ship operator, *i.e.,* a user, who operates the own ship **200** refers. However, the display module **7** is not limited to the above configuration, and, for example, it may be a display screen for a portable computer which is carried by a ship operator's assistant who monitors the surrounding situation from the own ship **200,** a display screen for a passenger to watch in the cabin of the own ship **200,** or a display part for a head mounted display, such as a wearable glass, worn by a passenger.

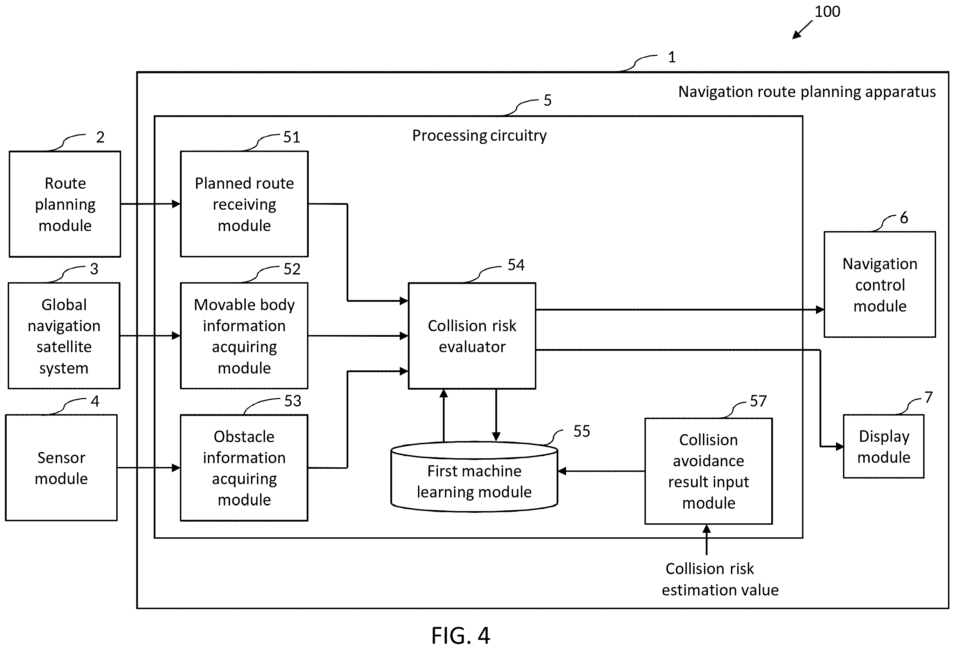

**FIG. 4** is a block diagram illustrating the navigation route planning system **100** for safely navigating the own ship **200,** according to another embodiment of the present disclosure. The navigation route planning system **100** includes the navigation route planning apparatus **1,** the route planning module **2,** the GNSS **3,** and the one or more sensor modules **4.** The navigation route planning apparatus **1** includes the processing circuitry **5,** the navigation control module **6,** and the display module **7.** The route planning module **2,** the GNSS **3,** the one or more sensor modules **4,** the navigation control module **6,** and the display module **7** function in a similar manner as described in **FIG. 1****.**

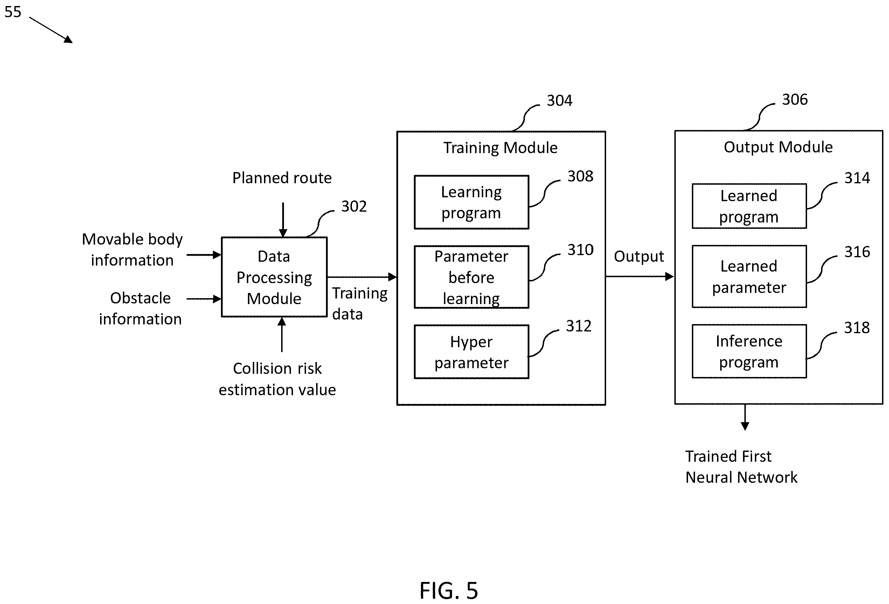

The processing circuitry **5** includes the planned route receiving module **51,** the movable body information acquiring module **52,** the obstacle information acquiring module **53,** the collision risk evaluator **54,** the first machine learning module **55,** and a collision avoidance result input module **57.** The planned route receiving module **51,** the movable body information acquiring module **52,** and the obstacle information acquiring module **53** function in a similar manner as described in **FIG. 1****.** **FIG. 5** is a block diagram illustrating a configuration of the first machine learning module **55,** according to another embodiment of the present disclosure.

Referring now to **FIGs. 4** and **5****.** in one embodiment, the collision avoidance result input module **57** receives and provides the collision risk estimation value that indicates a degree of the risk of collision to the first machine learning module **55.** The first neural network is configured to receive the collision risk estimation value and generate the collision avoidance output data which is a result of collision avoidance of the own ship **200** with the obstacle **204.** During the learning process, the data processing module **302** receives the planned route **202,** the movable body information, the obstacle information, and the collision risk estimation value as the input data, and processes the input data to generate the training data. Further, the training module **304** receives the training data from the data processing module **302,** and trains the first neural network to learn the collision risk estimation value using the training data, the learning program **308,** and the hyper parameter **312.** The trained first neural network is configured to receive the input data as a reference.

After the learning process, the collision risk evaluator **54** determines whether the own ship **200** avoids the planned route **202** or continues following the planned route **202** based on the collision avoidance output data using the trained first neural network. If the collision risk estimation value is high then the own ship **200** avoids the planned route **202.**

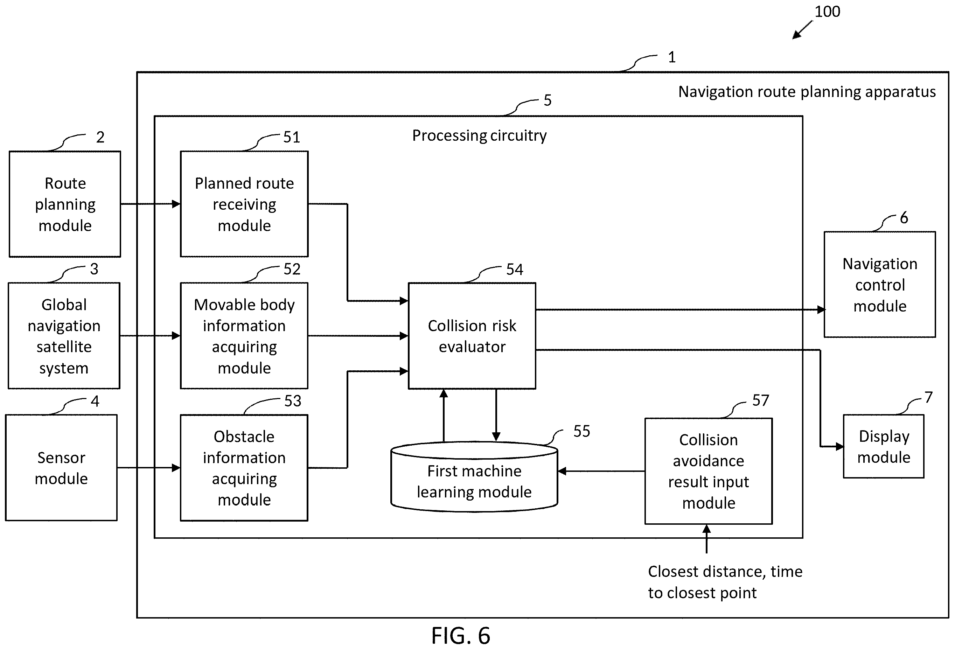

**FIG. 6** is a block diagram illustrating the navigation route planning system **100** for safely navigating the own ship **200,** according to yet another embodiment of the present disclosure. The navigation route planning system **100** includes the navigation route planning apparatus **1,** the route planning module **2,** the GNSS **3,** and the one or more sensor modules **4.** The navigation route planning apparatus **1** includes the processing circuitry **5,** the navigation control module **6,** and the display module **7.** The route planning module **2,** the GNSS **3,** the one or more sensor modules **4,** the navigation control module **6,** and the display module **7** functions in a similar manner as described in **FIG. 1****.**

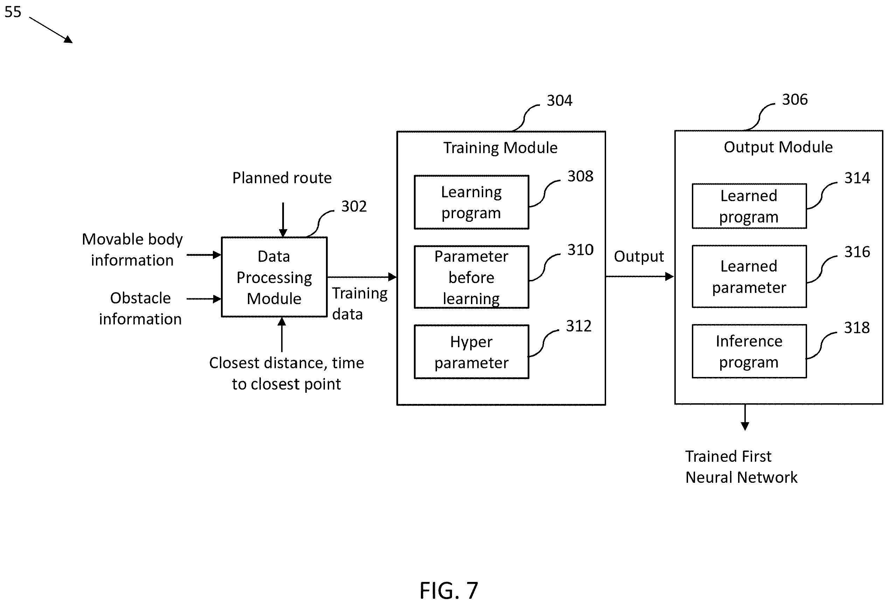

The processing circuitry **5** includes the planned route receiving module **51,** the movable body information acquiring module **52,** the obstacle information acquiring module **53,** the collision risk evaluator **54,** the first machine learning module **55,** and the collision avoidance result input module **57.** The planned route receiving module **51,** the movable body information acquiring module **52,** and the obstacle information acquiring module **53** functions in a similar manner as described in **FIG. 1****.** **FIG. 7** is a block diagram illustrating a configuration of the first machine learning module **55,** according to yet another embodiment of the present disclosure.

Referring now to **FIGs. 6** and **7****,** the collision risk evaluator **54** is further configured to determine whether the own ship **200** requires to avoid the collision with the obstacle **204** based on collision risk data that includes at least one of: a closest distance and a time required by the own ship **200** to traverse the closest distance.

In one embodiment, the collision avoidance result input module **57** receives and provides the collision risk data that includes the closest distance between the own ship **200** and the obstacle **204** to the first machine learning module **55.** The first neural network is configured to receive the closest distance between the own ship **200** and the obstacle **204,** and generate the collision avoidance output data which is a result of collision avoidance of the own ship **200** with the obstacle **204.** During the learning process, the data processing module **302** receives the planned route **202,** the movable body information, the obstacle information, and the collision risk data including the closest distance as the input data, and processes the input data to generate the training data. Further, the training module **304** receives the training data from the data processing module **302,** and trains the first neural network to learn the collision risk data that includes the closest distance between the own ship **200** and the obstacle **204** using the input data as the training data. The trained first neural network is configured to receive the input data as a reference. After the learning process, the collision risk evaluator **54** generates a closest distance output based on the collision avoidance output data using the trained first neural network. In one embodiment, the closest distance between the own ship **200** and the obstacle **204** is calculated based on the positional relationship between the own ship **200** and the obstacle **204,** the relative velocity of the own ship **200** and the obstacle **204,** the moving direction, and the speed of the own ship **200** and the obstacle **204.** The closest distance output between the own ship **200** and the obstacle **204** may be used to calculate the collision risk value associated with the planned route **202** along the current course direction.

In another embodiment, the collision risk data further includes the time required to traverse the closest distance output from a position of the own ship **200** without collision avoidance. The collision avoidance result input module **57** is configured to provide the collision risk data that includes the time required to traverse the closest distance output from a position of the own ship **200** to the first machine learning module **55.** The first neural network is configured to receive the time to traverse the closest distance output, and generate the collision avoidance output data which is a result of collision avoidance of the own ship **200** with the obstacle **204.** During the learning process, the data processing module **302** receives the planned route **202,** the movable body information, the obstacle information, and the collision risk data including the time to traverse the closest distance as the input data, and processes the input data to generate the training data. Further, the training module **304** receives the training data from the data processing module **302,** and trains the first neural network to learn the time using the training data. The trained first neural network is further configured to receive the input data as a reference. After the learning process, the collision risk evaluator **54** determines whether the own ship **200** avoids the planned route **202** or continues following the planned route **202** based on the closest distance output and the time required by the movable body **200** to traverse the closest distance output using the trained first neural network.

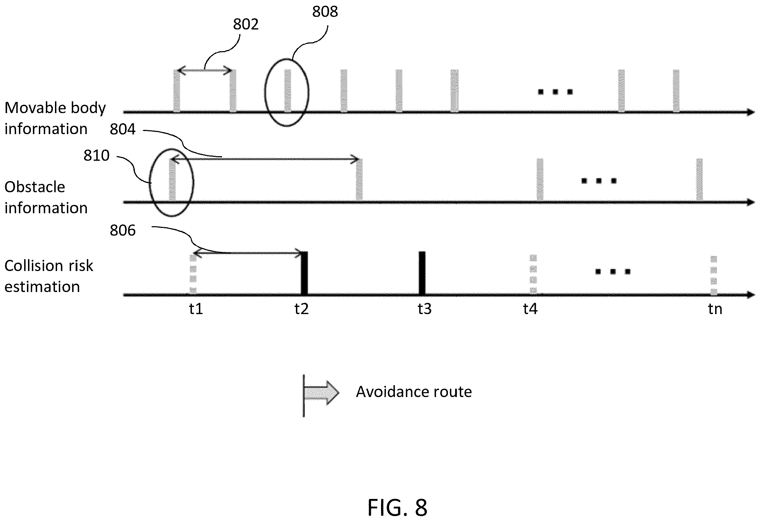

**FIGs. 8-10** illustrate calculation of the collision risk value based on latest movable body information and latest obstacle information, according to various embodiments of the present disclosure. As the own ship **200** navigates, the surrounding area of the own ship **200** changes accordingly. Therefore, the movable body information acquiring module **52** is further configured to periodically receive the movable body information in a first time period **802,** *i.e.,* at regular intervals of the first time period **802.** In one embodiment, the trained first neural network further receives the input data that includes latest acquired movable body information as a reference. Based on the latest acquired movable body information, the collision risk evaluator **54** again determines whether the movable body **200** avoids the planned route **202** or continues following the planned route **202** based on the collision avoidance output data using the trained first neural network.

Similarly, the obstacle information acquiring module **53** is further configured to periodically receive the obstacle information in a second time period **804,** *i.e.,* at regular intervals of the second time period **804.** In one embodiment, the trained first neural network further receives the input data that includes latest acquired obstacle information as a reference. Based on the latest acquired obstacle information, the collision risk evaluator **54** again determines whether the movable body **200** avoids the planned route **202** or continues following the planned route **202** based on the collision avoidance output data using the trained first neural network.

In one embodiment, the trained first neural network periodically receives the input data that includes the latest acquired movable body information and the obstacle information as a reference in a third time period **806.** The third time period **806** is longer than at least any one of: the first time period **802** and the second time period **804.** In this embodiment, the third time period **806** is longer than the first time period **802** and shorter than the second time period **804.** Thus, the collision risk evaluator **54** periodically determines, in the third time period **806,** whether the own ship **200** avoids the planned route **202** or continues following the planned route 202 based on the collision avoidance output data using the trained first neural network.

The movable body information acquiring module **52** receives the movable body information in the first time period **802,** which is shorter than the third time period **806.** The collision avoidance output data at the timing t2 is determined based on the movable body information and the obstacle information acquired at the timing t1 and t2 that are indicated by circles **808** and **810,** respectively.

The periodic acquisition of the movable body information and the obstacle information are preferable because higher is a frequency of acquisition, a greater number of times the collision avoidance output data may be determined based on the latest movable body information and the latest obstacle information.

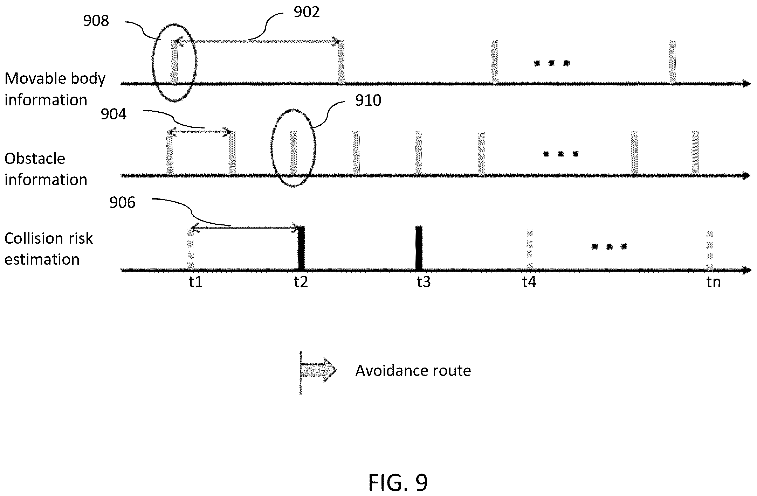

Referring now to **FIG. 9****,** in another embodiment, the collision risk evaluator **54** periodically determines, in a third time period **906,** whether the own ship **200** avoids the planned route **202** or continues following the planned route **202.** In this embodiment, the third time period **906** is longer than a second time period **904** and shorter than a first time period **902** based on the updated acquired movable body information and the updated acquired obstacle information. The collision avoidance output data at the timing t2 is calculated based on the movable body information and the obstacle information acquired at the timing t1 and t2 that are indicated by circles **908** and **910,** respectively.

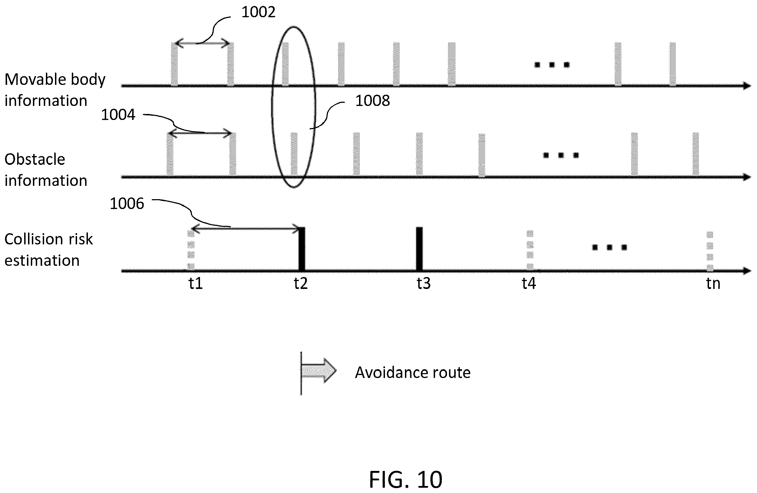

Referring now to **FIG. 10****,** in yet another embodiment, the collision risk evaluator **54** periodically determines, in a third time period **1006,** whether the own ship **200** avoids the planned route **202** or continues following the planned route **202.** In this embodiment, the third time period **1006** which is longer than a first time period **1002** and a second time period **1004.** The collision avoidance output data at the timing t2 is calculated based on the movable body information and the obstacle information acquired at the timing t2 that is indicated by circle **1008.** In **FIG. 10****,** the obstacle information acquiring module **53** may acquire the obstacle information in the second time period **1004,** which is shorter than the third time period **1006.**

Ideally, it is preferable to acquire both the movable body information and the obstacle information at a high frequency and determine the collision avoidance output data based on the latest information. In one example, the collision avoidance output data determined at the timing t1 does not indicate a collision risk, but the collision avoidance output data determined at t2 indicates a high possibility of collision. Therefore, an avoidance route is generated, and the own ship **200** is required to navigation along the avoidance route. The determined collision avoidance output data at the timing t3 still indicates a collision risk with the obstacle, but the risk of collision decreases at t4 due to the avoidance route.

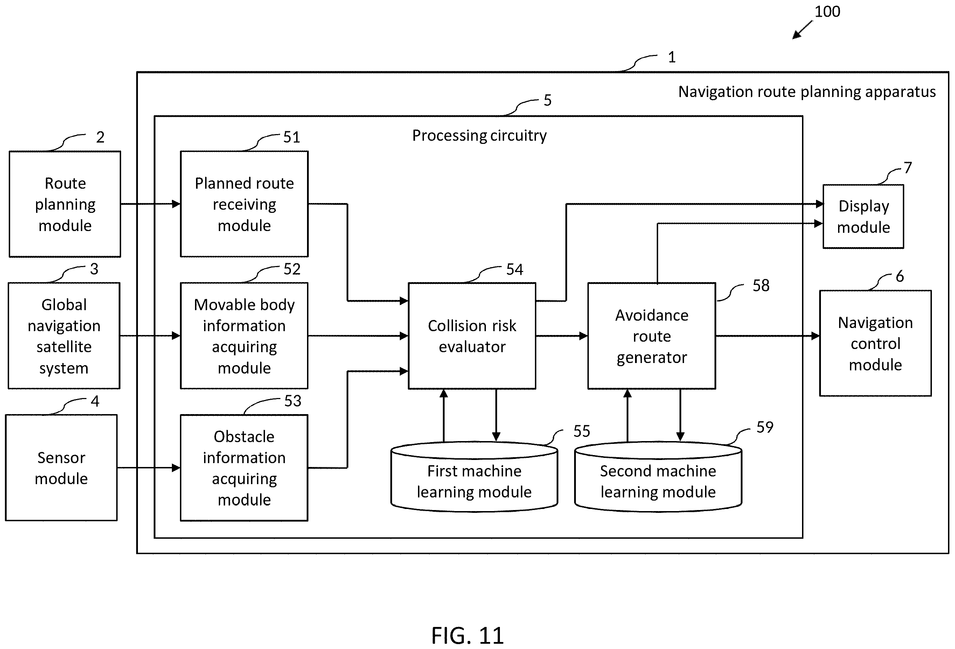

**FIG. 11** is a block diagram illustrating a configuration of the navigation route planning system **100** for safely navigating the own ship **200,** according to yet another embodiment of the present disclosure.

The navigation route planning system **100** includes the navigation route planning apparatus **1,** the route planning module **2,** the GNSS **3,** and the one or more sensor modules **4.** The navigation route planning apparatus **1** include the processing circuitry **5,** the navigation control module **6,** the display module **7.** The route planning module **2,** the GNSS **3,** the one or more sensor modules **4,** the navigation control module **6,** and the display module **7** functions in a similar manner as described in **FIG. 1****.**

The processing circuitry **5** includes the planned route receiving module **51,** the movable body information acquiring module **52,** the obstacle information acquiring module **53,** the collision risk evaluator **54,** the first machine learning module **55,** an avoidance route generator **58,** and a second machine learning module **59.** The planned route receiving module **51,** the movable body information acquiring module **52,** the obstacle information acquiring module **53,** the collision risk evaluator **54,** and the first machine learning module **55** functions in a similar manner as described in **FIG. 1****.**

The avoidance route generator **58** may be operably coupled with, and hence in communication with the collision risk evaluator **54,** and receives the collision avoidance output data. The avoidance route generator **58** includes a second neural network (not shown) that is configured to receive the planned route **202,** the movable body information, the obstacle information, and the collision avoidance output data as input data, and generate avoidance route output data as a result of avoidance route for avoiding the obstacle **204.**

The machine learning module **59** is configured to train the second neural network to learn the avoidance route output data using the input data as training data. The trained second neural network is configured to receive the input data as a reference. The avoidance route generator **58** is configured to generate the avoidance route **208** in place of the planned route **202** ahead of the current position or a predicted position as the reference point **210** of the own ship **200** based on the avoidance route output data using the trained second neural network. The predicted position of the own ship **200** may be one of: a predicted position on the current course, a predicted position on the planned route **202,** or a predicted position on an avoidance route. The avoidance route generator **58** may determine the predicted position based on a current speed and a turning angular velocity of the own ship **200.** In one embodiment, the avoidance route generator **58** generates the avoidance route **208** when the obstacle **204** is determined on the planned route **202** of the own ship **200** as illustrated in the **FIG. 4****,** and when the collision risk evaluator **54** determines that the own ship **200** avoids the planned route **202.** If the collision risk value is high then the avoidance route generator **58** generates and sets the avoidance route **208** for the own ship **200** for avoiding collisions with the obstacle **204.** The generated avoidance route with a chart may be displayed on the screen of the display module **7.** In one embodiment, the generated avoidance route **208** may be automatically inputted to an autopilot of the own ship **200** to navigate the own ship **200** along the avoidance route **208.**

In one embodiment, the movable body information acquiring module **52** is further configured to periodically receive the movable body information that includes the moving direction of the own ship **200** in the first time period **1002,** *i.e.,* at regular intervals of the first time period **1002.** Similarly, the obstacle information acquiring module **53** is further configured to periodically receive the obstacle information in the second time period **1004,** *i.e.,* at regular intervals of the second time period **1004.**

The trained first neural network is further configured to periodically receive the input data that includes the latest acquired movable body information and the latest acquired obstacle information as a reference in the third time period **1006.** The third time period **1006** is longer than at least one of: the first time period **1002** and the second time period **1004.** In this embodiment, the third time period **1006** is longer than the first time period **1002** or the second time period **1004.** The collision risk evaluator **54** is configured to periodically determine, in the third time period **1006,** whether the movable body **200** avoids the planned route **202** or continues following the planned route **202** based on the collision avoidance output data using the trained first neural network.

The trained second neural network is further configured to periodically receive the input data as a reference when the collision risk evaluator **54** determines that the movable body **200** avoids the planned route **202.** In one embodiment, the trained second neural network is further configured to periodically receive the input data as a reference in the third time period **1006.** The collision avoidance output data at the timing t2 is calculated based on the movable body information and the obstacle information acquired at the timing t2 that is indicated by circle 1008. The avoidance route generator **58** is further configured to periodically generate, in the time period **1006,** the avoidance route **208** in place of the planned route **202** ahead of the current position **210** or the predicted position of the movable body **200** to avoid the collision with the obstacle **204** based on the avoidance route output data using the trained second neural network.

The navigation control module **6** may be operably coupled with, and hence in communication with the avoidance route generator **58.** The navigation control module **6** monitors and controls the navigation of the own ship **200,** based on the determination whether the own ship **200** avoids the planned route **202** or continues following the planned route **202.** To control the navigation of the own ship **200,** the navigation control module **6** may control the position, the moving direction, and the speed of the own ship **200.** Based on the determination that the own ship **200** avoids the planned route **202,** the navigation control module **6** navigates the own ship **200** along the avoidance route **208** to avoid the obstacle **204.**

The display module **7** may be operably coupled with, or in electrical connection to, the collision risk evaluator **54** and the avoidance route generator **58.** The display module **7** displays the planned route **202** along which the own ship **200** is traversing. In addition, when the own ship **200** avoids the planned route **202,** the display module **7** displays the avoidance route **208** along which the own ship **200** navigates to avoid the collision with the obstacle **204.** Thus, the ship operator may safely navigate the own ship **200** by avoiding the collision with the obstacle **204.**

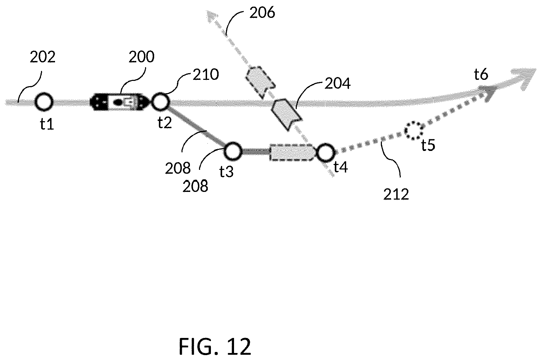

**FIG. 12****,** illustrates a region surrounding the own ship **200,** according to one embodiment of the present disclosure. In one example, if the obstacle **204** is detected on the planned route **202,** a collision risk value between the own ship **200** and the obstacle **204** is calculated by the navigation route planning apparatus **1.** There will be a risk of collision if the collision risk value is high or equal to the predetermined threshold value. The trained first neural network receives the input data that includes the latest movable body information and the latest obstacle information, and the collision risk avoidance data as a reference at regular intervals of time. The collision risk evaluator **54** periodically determines whether the own ship **200** avoids the planned route **202.** In one example, if the collision risk evaluator **54** determines that the own ship **200** avoids the planned route **202,** then the avoidance route generator **58** periodically generates and sets the avoidance route **208** for the own ship **200.**

The avoidance route generator **58** periodically acquires the latest movable body information and the obstacle information at regular interval of times t2, t3, t4, etc. and generates and updates the next avoidance route at each regular interval of time t2, t3, t4, etc. while the own ship **200** is navigating on the avoidance route **208.** In one embodiment, the avoidance route generator **58** is further configured to periodically generate the avoidance route **208** that includes a return path **212** based on the avoidance route output data. The return path is followed by the own ship **200** to navigate and return to the planned route **202** while avoiding the collision with the obstacle **204.** The navigation on the avoidance route **208** ends at the time interval t6 when the own ship **200** has returned to the planned route **202.** In one embodiment, when the avoidance route **208** is generated, the avoidance route **208** scheduled to return to the planned route **202** may also be generated. The navigation control module **6** monitors and controls the navigation of the own ship **200** along the avoidance route **208** to avoid the obstacle **204** and along the return path **212** to return on the planned route **202.** The display module **7** displays the return path **212** along with the planned route **202** and the avoidance route **208.** Thus, the ship operator may safely navigate the own ship **200** by avoiding the collision with the obstacle **204.**

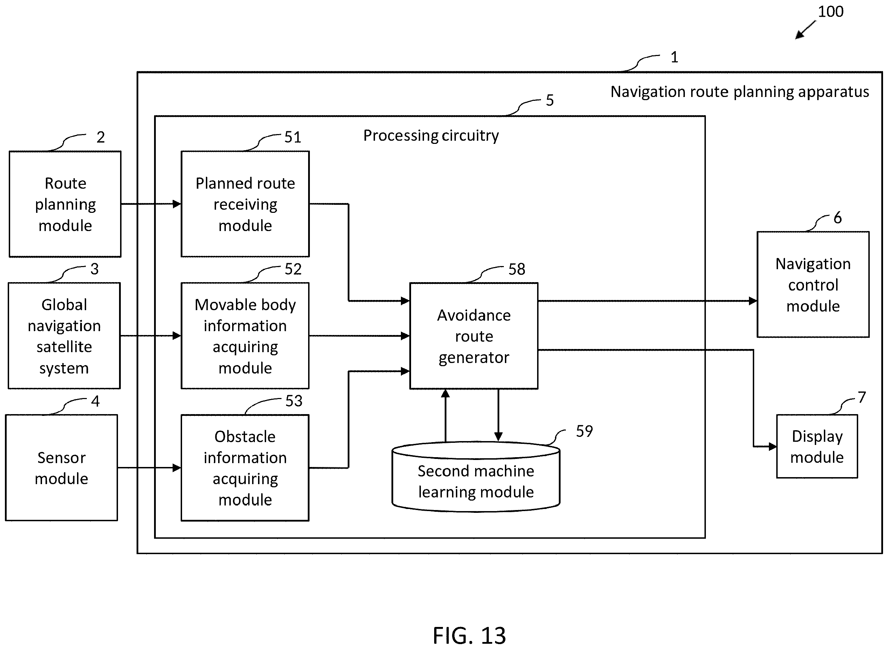

**FIG. 13** is a block diagram illustrating a configuration of the navigation route planning system **100** for safely navigating the own ship **200,** according to yet another embodiment of the present disclosure.

The navigation route planning system **100** includes the navigation route planning apparatus **1,** the route planning module **2,** the GNSS **3,** and the one or more sensor modules **4.** The navigation route planning apparatus **1** includes the processing circuitry **5,** the navigation control module **6,** and the display module **7.** The route planning module **2,** the GNSS **3,** and the one or more sensor modules **4** function in a similar manner as described in **FIG. 1****,** and the navigation control module **6** function in a similar manner as described in **FIGs. 11** and **12****.**

The processing circuitry **5** includes the planned route receiving module **51,** the movable body information acquiring module **52,** the obstacle information acquiring module **53,** the avoidance route generator **58,** and the second machine learning module **59.** The planned route receiving module **51,** the movable body information acquiring module **52,** the obstacle information acquiring module **53** function in a similar manner as described in **FIG. 1****,** and the display module 7 functions in a similar manner as described in **FIGs. 11** and **12****.**

The avoidance route generator **58** may be operably coupled with, and hence in communication with the planned route receiving module **51,** the movable body information acquiring module **52,** and the obstacle information acquiring module **53.** The avoidance route generator **58** receives the route selected by the user as the planned route **202,** the movable body information of the own ship **200,** and the obstacle information of the obstacle **204.**

The avoidance route generator **58** includes the trained second neural network that is configured to receive the planned route, the movable body information, and the obstacle information as input data, and generate the avoidance route output data as a result of avoidance route for avoiding the obstacle **204.**

The second machine learning module **59** may be structurally similar to the first machine learning module **55** as described in **FIG. 1****.** The second machine learning module **59** trains the trained second neural network to learn the avoidance route output data using the input data as training data. The trained second neural network is configured to receive the input data as a reference. The avoidance route generator **58** generates the avoidance route **208** in place of the planned route **202** ahead of the current position or the predicted position as the reference point **210** of the own ship **200** based on the avoidance route output data using the trained second neural network. The avoidance route generator **58** generates the avoidance route **208** when the obstacle **204** is determined on the planned route **202** of the own ship **200** as illustrated in the **FIG. 12****.** The avoidance route generator **58** generates the avoidance route **208** based on the avoidance route output data. If the collision risk value is high then the avoidance route generator **58** generates and sets the avoidance route **208** for the own ship **200** for avoiding collisions with the obstacle **204** that is to be avoided. The generated avoidance route with a chart may be displayed on the screen of the display module **7.** In one embodiment, the generated avoidance route may be automatically inputted to an autopilot of the own ship **200** to navigate the own ship **200** along the avoidance route **208.**

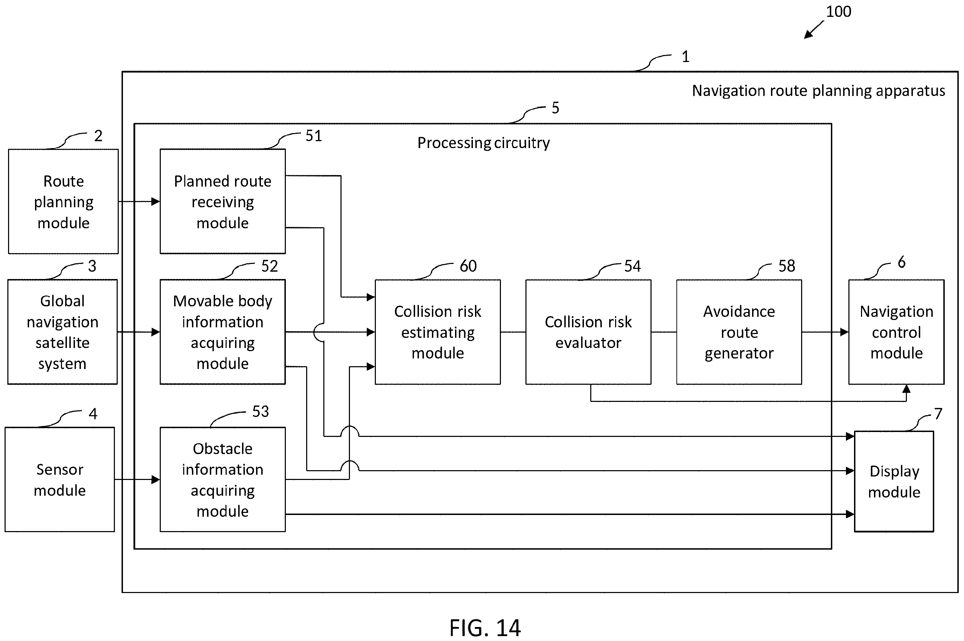

**FIG. 14** is a block diagram illustrating a configuration of the navigation route planning system **100** for safely navigating the own ship **200,** according to yet another embodiment of the present disclosure.

The navigation route planning system **100** includes the navigation route planning apparatus **1,** the route planning module **2,** the GNSS **3,** and the one or more sensor modules **4.** The navigation route planning apparatus **1** includes the processing circuitry **5,** the navigation control module **6,** and the display module **7.** The route planning module **2,** the GNSS **3,** the one or more sensor modules **4,** and the navigation control module **6** function in a similar manner as described in **FIG. 11****.**

The processing circuitry **5** includes the planned route receiving module **51,** the movable body information acquiring module **52,** the obstacle information acquiring module **53,** the collision risk evaluator **54,** the avoidance route generator **58,** and a collision risk estimating module **60.** The planned route receiving module **51,** the movable body information acquiring module **52,** the obstacle information acquiring module **53,** the avoidance route generator **58** functions in a similar manner as described in **FIG. 11****.**

The collision risk estimating module **60** may be operably coupled with, and hence in communication with, the planned route receiving module **51,** the movable body information acquiring module **52,** and the obstacle information acquiring module **53.** The collision risk estimating module **60** receives the route selected by the user as the planned route **202,** the movable body information of the own ship **200,** and the obstacle information of the obstacle **204.** The collision risk estimating module **60** determines a collision risk value associated with the planned route **202** along the current course direction based on the movable body information and the obstacle information. The collision risk value is calculated based on the position, the moving direction, and the speed of the own ship **200** and the obstacle **204.** The collision risk value indicates a degree of the risk of collision between the own ship **200** and the obstacle **204.** In one example, if the collision risk value is high then there will be a higher risk of collision between the own ship **200** and the obstacle **204.**

The collision risk evaluator **54** is further configured to determine whether the own ship **200** avoids the planned route **202** or continues following the planned route **202** based on the collision risk value associated with the planned route **202.** If the collision risk is high then the own ship **200** avoids the planned route **202.** In one example, if the collision risk evaluator **54** determines that the own ship **200** avoids the planned route **202** based on the collision risk value, then the navigation route planning apparatus **1** facilitates the ship operator to sail the own ship **200** through the avoidance route **208** from a current position of the own ship **200** as a reference point **210** as illustrated in the **FIG. 12****.**

When the avoidance route **208** is generated, the planned route **208** and the avoidance route **208** are displayed on the screen of the display module **7.** In one embodiment, the positions of the own ship **200** and the obstacle **204** when the avoidance route **208** is generated, the planned route **208** along with the avoidance route **208,** and the collision risk value may also be displayed on the screen of the display module **7.** The ship operator may check the screen of the display module **7** and safely navigate the own ship **200** along the avoidance route **208.** The ship operator may also switch to automatic navigation in conjunction with the autopilot of the own ship **200.**

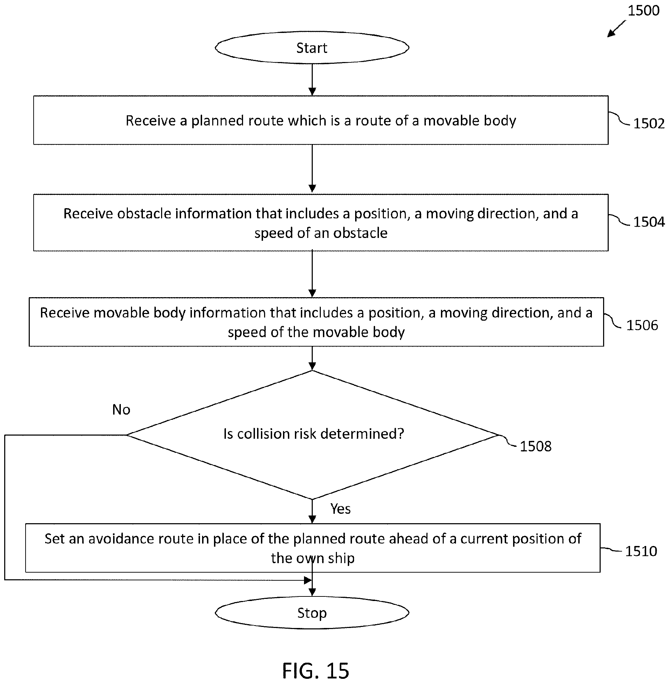

**FIG. 15** represents a flow chart illustrating a navigation route planning method **1500** in accordance with an embodiment of the present disclosure.

At step **1502,** the planned route receiving module **51** receives the planned route **202** which indicates a route of the own ship **200** and the current course direction from the current position of the own ship **200.** The route planning module **2** may provide one or more routes for navigation of the own ship **200** from the source location to the destination location.

At step **1504,** the obstacle information acquiring module **53** receives the obstacle information from the one or more sensor modules **4.** The obstacle information includes the position, the moving direction, and the speed of the obstacle **204.** The obstacle information further includes information relating to at least one of: other movable bodies includes other vessels, tidal currents, weather, reefs, and stranded ships.

At step **1506,** the movable body information acquiring module **52** receives the movable body information that includes the position, the moving direction, and the speed of the own ship **200.**

If at step **1508,** the collision risk evaluator **54** determines that the collision risk is high along the planned route **202,** and the own ship **200** avoids the planned route **202** based on the collision risk output data, step **1510** is executed. At step **1510,** the avoidance route generator **58** generates the avoidance route **208** in place of the planned route **202** ahead of the current position or the predicted position of the own ship **200,** and displays the avoidance route **208** on the screen of the display module **7.** If at step **1508,** the collision risk evaluator **54** determines that the collision risk is low along the planned route **202** then the ship operator may continue navigating the own ship **200** along the planned route **202.**

When the obstacle **204** intrudes into or is likely to intrude into the planned route **202** is detected while the own ship **200** navigates along the planned route **202,** the position, the moving direction, and the speed of the own ship **200** and the obstacle **204** are inputted into the first neural network learned by the first machine learning module **55.** The collision risk evaluator **54** determines whether the own ship **200** avoids the planned route **202** or continues following the planned route **202** based on the collision avoidance output data using the trained first neural network.

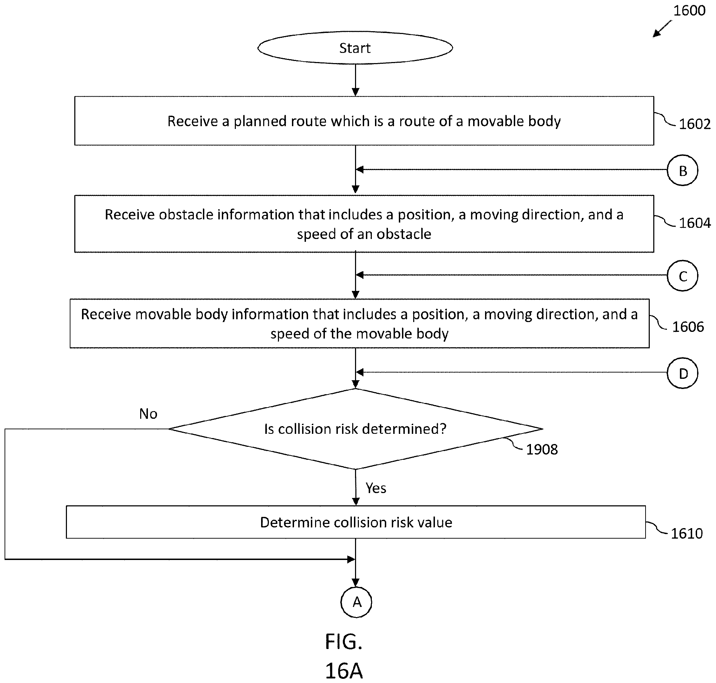

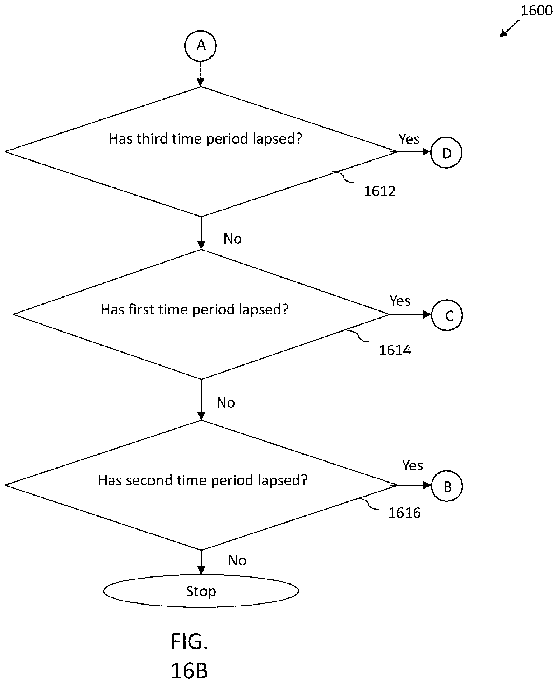

**FIGs. 16A** and **16B****,** collectively, represent a flow chart illustrating a navigation route planning method **1600** in accordance with another embodiment of the present disclosure.

At step **1602,** the planned route receiving module **51** receives the planned route **202** which indicates a route of the own ship **200** and the current course direction from the current position of the own ship **200.** The route planning module **2** may provide one or more routes for navigation of the own ship **200** from the source location to the destination location.

At step **1604,** the obstacle information acquiring module **53** receives the obstacle information from the one or more sensor modules **4.** The obstacle information includes the position, the moving direction, and the speed of the obstacle **204.** The obstacle information further includes information relating to at least one of: other movable bodies include other vessels, tidal currents, weather, reefs, and stranded ships. The obstacle information acquiring module **53** is further configured to periodically receive the obstacle information of the obstacle **204.**

At step **1606,** the movable body information acquiring module **52** receives the movable body information that includes the position, the moving direction, and the speed of the own ship **200.** The movable body information acquiring module **52** is further configured to periodically receive the movable body information of the own ship **200.** The position, the moving direction, and the speed of the own ship **200** may be detected when the obstacle **204** may interfere with the navigation of the own ship **200.**

If at step **1608,** the collision risk evaluator **54** determines that the collision risk is high along the planned route **202** using the first neural network, step **1610** is executed. At step **1610,** the collision risk evaluator **54** determines the collision risk value associated with the planned route **202** along the current course direction using the first neural network based on the collision avoidance output data. If at step **1608,** the collision risk evaluator **54** determines that the collision risk is low, step **1612** is executed.

If at step **1612,** it is determined that the third time period has lapsed, step **1608** is executed. If at step **1612,** it is determined that the third time period has not lapsed, step **1614** is executed.

If at step **1614,** it is determined that the first time period has lapsed, step **1606** is executed. If at step **1614,** it is determined that the first time period has not lapsed, step **1616** is executed.

If at step **1616,** it is determined that a second time period has lapsed, step **1604** is executed. The collision risk evaluator **54** periodically input the input data that includes the latest movable body information and the latest obstacle information as a reference to the first neural network learned by the first machine learning module **55** and determines whether the own ship **200** avoids the planned route **202** or continues following the planned route **202,** periodically.

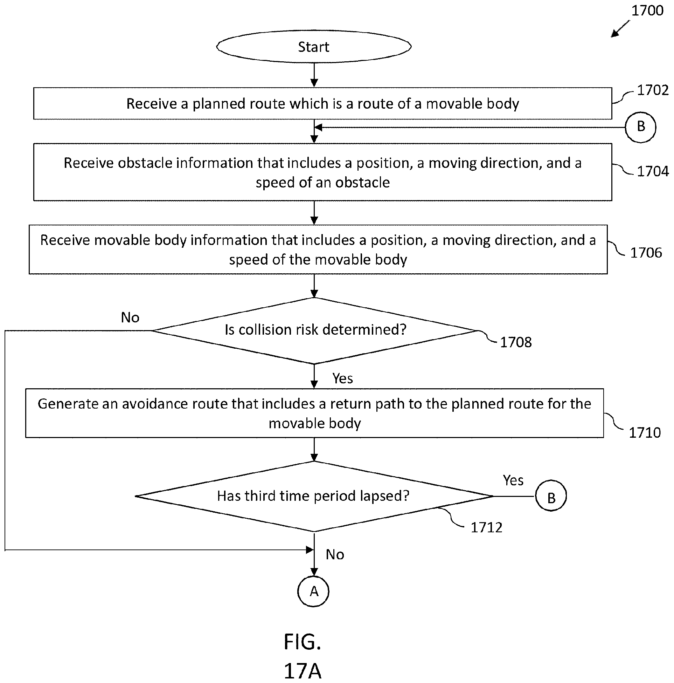

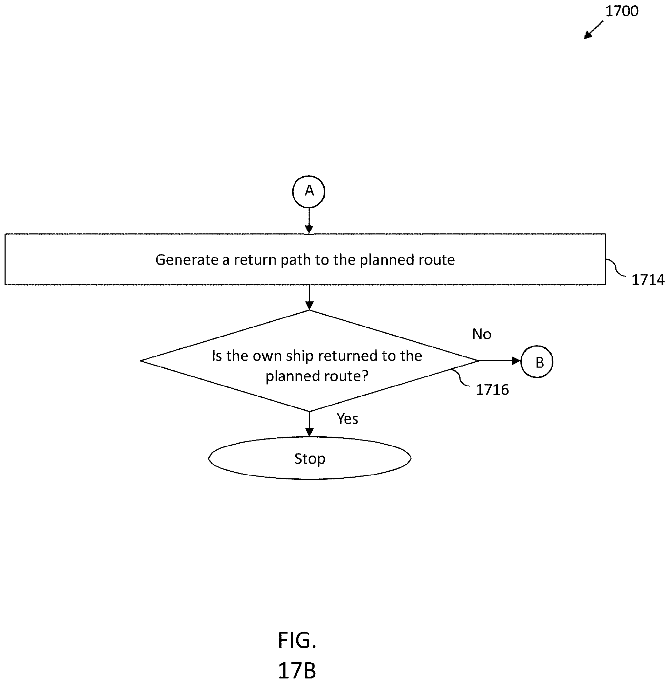

**FIGs. 17A** and **17B****,** collectively, represent a flow chart illustrating a navigation route planning method **1700** in accordance with yet another embodiment of the present disclosure.

At step **1702,** the planned route receiving module **51** receives the planned route **202** which indicates a route of the own ship **200** and the current course direction from the current position of the own ship **200.** The route planning module **2** may provide one or more routes for navigation of the own ship **200** from the source location to the destination location.

At step **1704,** the obstacle information acquiring module **53** receives the obstacle information from the one or more sensor modules **4.** The obstacle information includes the position, the moving direction, and the speed of the obstacle **204.** The obstacle information further includes information relating to at least one of: other movable bodies include other vessels, tidal currents, weather, reefs, and stranded ships. The obstacle information acquiring module **53** is further configured to periodically receive the obstacle information of the obstacle **204.**

At step **1706,** the movable body information acquiring module **52** receives the movable body information that includes the position, the moving direction, and the speed of the own ship **200.** The movable body information acquiring module **52** is further configured to periodically receive the movable body information of the own ship **200.** The position, the moving direction, and the speed of the own ship **200** may be detected when the obstacle **204** may interfere with the navigation of the own ship **200.**

If at step **1708,** the collision risk evaluator **54** determines that the collision risk is high along the planned route **202** using the first neural network, step **1710** is executed. At step **1710,** the avoidance route generator **58** generates an avoidance route **208** that includes a return path to the planned route **202** for the own ship **200** based on the avoidance route output data, periodically. In one embodiment, the avoidance route generator **58** may also generate the avoidance route **208** that is scheduled to return to the planned route **202.**

If at step **1712,** it is determined that the third time period has lapsed, step **1704** is executed. If at step **1712,** it is determined that the third time period has not lapsed, step **1714** is executed.

At step **1714,** the avoidance route generator **58** generates the return path **212** to the planned route **202** for the own ship **200.** If at step **1716,** it is determined that the own ship **200** is not returned to the planned route **202,** step **1704** is executed. If at step **1716,** it is determined that the own ship **200** has returned to the planned route **202,** the navigation of the avoidance route is completed and the ship operator may navigate the own ship **200** along the planned route **202.**

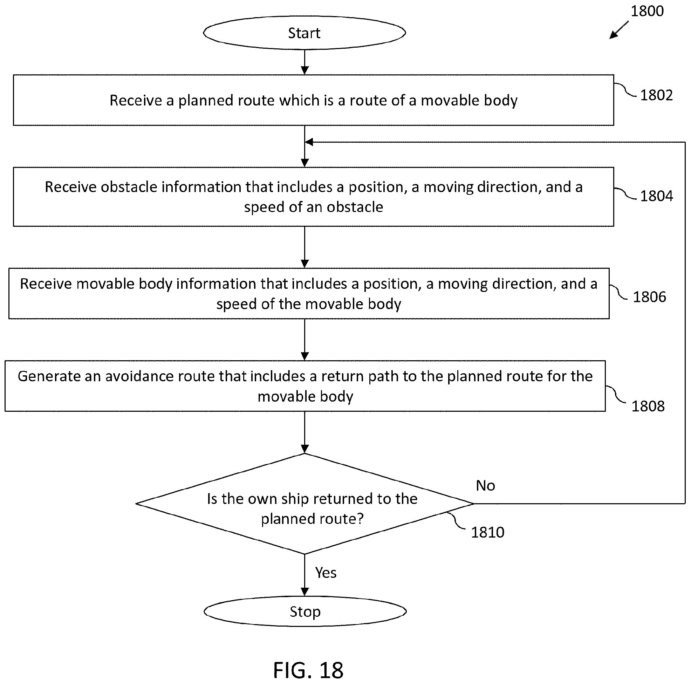

**FIG. 18** represents a flow chart illustrating a navigation route planning method **1800** in accordance with yet another embodiment of the present disclosure.

At step **1802,** the planned route receiving module **51** receives the planned route **202** which indicates a route of the own ship **200** and the current course direction from the current position of the own ship **200.** The route planning module **2** may provide one or more routes for navigation of the own ship **200** from the source location to the destination location.

At step **1804,** the obstacle information acquiring module **53** receives the obstacle information from the one or more sensor modules **4.** The obstacle information includes the position, the moving direction, and the speed of the obstacle **204.** The obstacle information further includes information relating to at least one of: other movable bodies includes other vessels, tidal currents, weather, reefs, and stranded ships. The obstacle information acquiring module **53** periodically receives the obstacle information of the obstacle **204.**

At step **1806,** the movable body information acquiring module **52** receives the movable body information that includes the position, the moving direction, and the speed of the own ship **200.** The movable body information acquiring module **52** periodically receives the movable body information of the own ship **200.** The position, the moving direction, and the speed of the own ship **200** may be detected when the obstacle **204** may interfere with the navigation of the own ship **200.**

At step **1808,** the avoidance route generator **58** generates the avoidance route **208** that includes the return path **212** to the planned route **202** for the own ship **200.**

If at step **1810,** it is determined that the own ship **200** is not returned to the planned route **208,** steps **1804, 1806,** and **1808** are executed again. If at step **1810,** it is determined that the own ship **200** has returned to the planned route **202,** the navigation of the avoidance route is completed and the ship operator may navigate the own ship **200** along the planned route **202.**

### DESCRIPTION OF REFERENCE CHARACTERS

- 1: Navigation route planning apparatus
- 2: Route planning module
- 3: Global navigation satellite system (GNSS)
- 4: Sensor modules
- 5: Processing circuitry
- 6: Navigation control module
- 51: Planned route receiving module
- 52: Movable body information acquiring module
- 53: Obstacle information acquiring module
- 54: Collision risk calculator
- 55: First machine learning module
- 7: Display module
- 57: Collision avoidance result input module
- 58: Avoidance route generator
- 59: Second machine learning module
- 60: Collision risk estimating module
- 200: Movable body (Own Ship)
- 202: Planned route
- 204: Obstacle
- 206: Predicted future path
- 208: Avoidance route
- 210: Reference point (Current position of the movable body)
- 212: Return path

## Claims

1. A navigation route planning apparatus (1), comprising:
a planned route receiving module (51) configured to receive a planned route, a movable body (200) moving on a water surface planned to move along;
a movable body information acquiring module (52) configured to receive movable body information that includes a position, a moving direction, and a speed of the movable body (200);
an obstacle information acquiring module (53) configured to receive obstacle information that includes a position, a moving direction, and a speed of an obstacle (204);
a collision risk evaluator (54) including a first neural network that is configured to receive the planned route, the movable body information, and the obstacle information as input data, and generate collision avoidance output data which is a result of collision avoidance of the movable body with the obstacle; and
wherein the collision risk evaluator (54) is configured to determine whether the movable body (200) avoids the planned route (202) or continues following the planned route (202) based on the collision avoidance output data using the trained first neural network.

2. The navigation route planning apparatus (1) according to claim 1, wherein:
the first neural network is further configured to receive a relative positional relationship between the planned route (202) and the obstacle (204) based on the position of the movable body (200) as the input data.

3. The navigation route planning apparatus (1) according to claim 1, further comprising:
a collision avoidance result input module (57) configured to provide a collision risk estimation value that indicates a degree of risk of collision to the first machine learning module (55), wherein:
the collision risk evaluator (54) is further configured to generate a collision risk estimation value based on the collision avoidance output data using the trained first neural network.

4. The navigation route planning apparatus (1) according to claim 1, further comprising:
a collision avoidance result input module (57) configured to provide collision risk data that includes a closest distance between the movable body (200) and the obstacle (204) as the collision avoidance output data to the first machine learning module (55), wherein:
the collision risk evaluator (54) is further configured to generate a closest distance output based on the collision avoidance output data using the trained first neural network.

5. The navigation route planning apparatus (1) according to claim 4, wherein the collision risk data further includes a time required to traverse the closest distance output from a position of the movable body (200) without collision avoidance, and wherein:
the collision risk evaluator (54) determines whether the movable body (200) avoids the planned route (202) or continues following the planned route (202) based on the closest distance output and the time required by the movable body (200) to traverse the closest distance output using the trained first neural network.

6. The navigation route planning apparatus (1) according to any one of claim 1 to 5, wherein the movable body information acquiring module (51) is further configured to periodically receive the movable body information in a first time period (902), and wherein:
the collision risk evaluator (54) is further configured to determine whether the movable body (200) avoids the planned route (202) or continues following the planned route (202) based on the collision avoidance output data using the trained first neural network.

7. The navigation route planning apparatus (1) according to claim 6, wherein the obstacle information acquiring module (53) is further configured to periodically receive the obstacle information in a second time period (904), and wherein:
the collision risk evaluator (54) is further configured to determine whether the movable body (200) avoids the planned route (202) or continues following on the planned route (202) based on the collision avoidance output data using the trained first neural network.

8. The navigation route planning apparatus (1) according to claim 7, wherein:
the trained first neural network is further configured to periodically receive the input data that includes the latest acquired movable body information and the latest acquired obstacle information as a reference in a third time period (906);
the third time period (906) longer than at least any one of: the first time period (902) and the second time period (904); and
the collision risk evaluator (54) is further configured to periodically determine whether the movable body (200) avoids the planned route (202) or continues following the planned route (202) based on the collision avoidance output data using the trained first neural network.

9. The navigation route planning apparatus (1) according to any one of claims 1 to 8, further comprising:
an avoidance route generator (58) including a second neural network that is configured to receive the planned route, the movable body information, the obstacle information, and the collision avoidance output data as input data, and generate avoidance route output data as a result of avoidance route for avoiding the obstacle (204); and
wherein the avoidance route generator (58) is configured to generate an avoidance route in place of the planned route (202) ahead of the current position (210) or a predicted position of the movable body (200) based on the avoidance route output data using the trained second neural network.

10. The navigation route planning apparatus (1) according to claim 9, wherein:
the movable body information acquiring module (52) configured to periodically receive the movable body information that includes a moving direction of the movable body (200);
the obstacle information acquiring module (53) configured to periodically receive the obstacle information of the obstacle (204);
the trained first neural network is further configured to periodically receive the input data that includes the latest acquired movable body information and the latest acquired obstacle information as a reference in the third time period (906) that is longer than the first time period (902) or the second time period (904);
the collision risk evaluator (54) is configured to periodically determine whether the movable body (200) avoids the planned route (202) or continues following the planned route (202) based on the collision avoidance output data using the trained first neural network;
the second trained neural network is further configured to periodically receive the input data as a reference when the collision risk evaluator (54) determines that the movable body (200) is required to avoid the planned route (202); and
the avoidance route generator (58) configured to periodically generate the avoidance route (208) in place of the planned route (202) ahead of the current position (210) or a predicted position of the movable body (200) to avoid the collision with the obstacle (204) based on the avoidance route output data using the trained second neural network.

11. The navigation route planning apparatus (1) according to claim 10, wherein the avoidance route generator (58) is further configured to periodically generate the avoidance route (208) including a return path based on the avoidance route output data, and wherein the return path is followed by the movable body (200) to return to the planned route (202) while avoiding collision with the obstacle (204).

12. The navigation route planning apparatus (1) according to any one of claims 1 to 11, further comprising:
a display module (7) configured to display the generated avoidance route along with the planned route on a screen of the display module (7).

13. The navigation route planning system (100) according to any one of claims 1 to 15, further comprising:
a route planning module (2) configured to provide one or more routes for navigation of the movable body (200) from the source location to the destination location;
a global navigation satellite system (3); and
one or more sensor modules (4) configured to acquire obstacle information.

14. A navigation route planning method, comprising:
receiving a planned route, a movable body (200) moving on a water surface planned to move along;
receiving movable body information that includes a position, a moving direction, and a speed of the movable body (200);
receiving obstacle information that includes a position, a moving direction, and a speed of an obstacle (204);
receiving the planned route, the movable body information, and the obstacle information as input data, and generating collision avoidance output data which is a result of collision avoidance of the movable body (200) with the obstacle (204);and
determining whether the movable body (200) avoids the planned route (202) or continues following on the planned route (202) based on the collision avoidance output data using a trained first neural network.

15. A non-transitory computer-readable medium having stored thereon computer-executable instructions which, when executed by a computer, cause the computer to;
receive a planned route a movable body (200) moving on a water surface planned to move along;
receive movable body information that includes a position, a moving direction, and a speed of the movable body (200);
receive obstacle information that includes a position, a moving direction, and a speed of an obstacle (204);
receive the planned route, the movable body information, and the obstacle information as input data, and generate collision avoidance output data which is a result of collision avoidance of the movable body (200) with the obstacle (204); and
determine whether the movable body (200) avoids the planned route (202) or continues following on the planned route (202) based on the collision avoidance output data using a trained first neural network.
